# EUROPÄISCHE PATENTSCHRIFT

(11) **EP 3 253 632 B1**
(45) Veröffentlichungstag und Bekanntmachung des Hinweises auf die Patenterteilung: **28.04.2021**
(21) Anmeldenummer: 16703256.4
(22) Anmeldetag: 03.02.2016
(51) Int. Cl.: B60T 13/66, B60T 13/68, F16D 66/02, F16D 55/22

(54) **VERFAHREN ZUR ÜBERWACHUNG EINER BREMSE FÜR KRAFTFAHRZEUGE, BREMSSYSTEM ZUR DURCHFÜHRUNG DES VERFAHRENS SOWIE KRAFTFAHRZEUG MIT EINEM SOLCHEN**
METHOD FOR MONITORING A BRAKE FOR MOTOR VEHICLES, BRAKE SYSTEM FOR IMPLEMENTING THE METHOD, AND MOTOR VEHICLE COMPRISING SAME
PROCÉDÉ PERMETTANT DE SURVEILLER UN FREIN DE VÉHICULE AUTOMOBILE, SYSTÈME DE FREINAGE PERMETTANT LA MISE EN OEUVRE DU PROCÉDÉ, AINSI QUE VÉHICULE AUTOMOBILE ÉQUIPÉ DUDIT SYSTÈME

(43) Veröffentlichungstag der Anmeldung: 13.12.2017
(73) Patentinhaber: WABCO Europe BVBA, 1170 Brussels (BE)
(72) Erfinder: DIECKMANN, Thomas, 30982 Pattensen (DE); KELLER, Marcos, 69469 Weinheim (DE); KUSIN, Denis, 31582 Nienburg (DE); WALLBAUM, Torsten, 31089 Duingen (DE)
(74) Vertreter: Rabe, Dirk-Heinrich
(86) Internationale Anmeldenummer: PCT/EP2016/000176
(87) Internationale Veröffentlichungsnummer: WO 2016/124331

(56) Entgegenhaltungen:
- EP-A1- 2 479 450
- WO-A1-01/79724
- WO-A2-2007/111704
- DE-A1- 4 424 270
- DE-A1- 19 517 708
- DE-A1- 19 826 053
- DE-A1-102004 008 383
- DE-A1-102012 102 579
- DE-A1-102013 100 786
- DE-B3-102012 007 021
- DE-B3-102012 015 377
- DE-C1- 19 521 401

## Beschreibung

Die Erfindung betrifft ein Verfahren zur Überwachung einer Bremse für Kraftfahrzeuge, wobei ein Lüftspiel der Bremse ermittelt wird, gemäß dem Oberbegriff des Anspruchs 1. Die Erfindung betrifft außerdem ein Bremssystem für Kraftfahrzeuge mit einer Überwachungselektronik zur Überwachung des Lüftspiels gemäß dem Oberbegriff des Anspruchs 9. Außerdem betrifft die Erfindung gemäß Anspruch 15 ein Kraftfahrzeug mit einem solchen Bremssystem.

Als Lüftspiel wird der Abstand zwischen Bremsbelag und den zugehörigen Reibpartnern an einem Fahrzeugrad verstanden. Ein Abstand zwischen dem Bremsbelag und dem Reibpartner, beispielsweise einer Bremsscheibe, ist erforderlich, damit der Reibpartner im ungebremsten Zustand frei laufen kann. Das Lüftspiel darf dabei allerdings nicht zu groß sein, da die Funktionsfähigkeit der Bremse ansonsten beeinträchtigt sein könnte. Andererseits neigen Bremsen mit zu einem geringen Lüftspiel zu einem Heißlaufen. Das tatsächliche Lüftspiel sollte daher einen unteren Grenzwert nicht unterschreiten und andererseits einen vorgesehenen oberen Grenzwert nicht überschreiten.

Die Überwachung einer Bremse ist dabei umso genauer, je genauer die Kenntnis des Lüftspiels ist. Die Ermittlung des Lüftspiels ist während der Fahrt eines Kraftfahrzeugs aufwendig und gelingt vielfach nur mit unzufrieden stellender Genauigkeit.

EP 2 520 817 A1 offenbart ein Verfahren zur Überwachung einer Bremse für Kraftfahrzeuge und einen Lüftspieldetektor, wobei das Lüftspiel der Bremse unter Heranziehung von gemessenen Positionswerten eines Bremsverschleißsensors ermittelt wird. Der Bremsverschleißsensor ist ein Wegsensor, welcher den Verschleiß des Bremsbelags signalisiert. Eine Auswerteeinheit erfasst das Lüftspiel dergestalt, dass bei einer mit Bezug zu einem vorgegebenen Soll-Lüftspiel erfassten definierten Vergrößerung des Lüftspiels und damit einem zu großen Lüftspiel eine Warnanzeige aktiviert ist. Bei der bekannten Einrichtung sind der Bremsverschleißsensor und die Auswerteeinheit so ausgelegt, dass durch Auswertung der Signaldifferenz des Bremsverschleißsensors bei betätigter und nicht betätigter Bremse ein aktuelles Lüftspiel als Ist-Lüftspiel erfasst und damit jedwede Abweichung des Lüftspiels vom Soll-Lüftspiel erfassbar sein soll. Es hat sich jedoch gezeigt, dass auf diese Weise eine präzise Ermittlung des Ist-Lüftspiels oft nicht möglich ist. Beispielsweise wird allein durch elastische Aufweitung mit funktionstragenden Bauteilen der Bremse, beispielsweise des Bremssattels, um ein vielfach größere Wege gemessen als das Soll-Lüftspiel.

Aus der DE 10 2012 102 579 A1 geht ein Verfahren und eine Vorrichtung zum Bestimmen eines Lüftspiels hervor. Dabei wird das vorhandene Lüftspiel mittels eines mathematischen Ersatzmodells der Scheibenbremse ausgehend von einem Startpunkt bestimmt. Der Startpunkt ergibt sich aus Messwerten, die während einer Fahrzeugbremsung aufgenommen und ausgewertet werden.

Die DE 10 2012 007021 B3 zeigt ein Verfahren zur Bestimmung eines vorhandenen Lüftspiels aus der Differenz des gemessenen Brückenhubs und des berechneten theoretischen Brückenhubs.

Die DE 10 2012 015 377 B3 offenbart ein Verfahren zur Berechnung eines Lüftspiels, wobei ein Lüftspielwert mittels Auswerten eines gemessenen statischen Bremsdrucks in Abhängigkeit einer Bewegung des Bremszustellhebels bestimmt wird.

Die DE 10 2013 100 786 A1 offenbart eine Scheibenbremse mit einer Lüftspielüberwachung, die eine Steuereinrichtung aufweist, welche mit dem Verschleißsensor und dem Bremssteuergerät in Verbindung steht. In dem Verfahren zur Lüftspielerkennung werden Wertepaare aus aktuellen Bremsdruckwerten und erfassten Signalwerten während eines Bremsvorgangs gebildet und diese mit vorher gespeicherten Referenzwerten verglichen

Der vorliegenden Erfindung liegt die Aufgabe zugrunde, die Zuverlässigkeit einer Überwachung des Lüftspiels einer Bremse mit möglichst geringem Aufwand zu verbessern. Diese Aufgabe wird erfindungsgemäß mit einem Verfahren mit den Merkmale des Anspruchs 1 gelöst. Außerdem löst die Aufgabe eine Bremssystem für Kraftfahrzeuge mit den Merkmale des Anspruchs 9. Außerdem wird die Aufgabe gemäß Anspruch 13 durch ein Kraftfahrzeug mit einem solchen Bremssystem gelöst.

Erfindungsgemäß ist vorgesehen, dass ein Bezugspositionswert des Bremsverschleißsensors in ungebremster Fahrt ermittelt wird und für die Bestimmung des Ist-Lüftspiels bereitgestellt wird. Während einer Bremsung, das heißt bei pneumatischer Betätigung der Bremse werden mehrere Wertepaare von diskreten Positionswerten und eines aktuellen Bremsdrucks der Bremse zum selben Zeitpunkt gebildet. Die diskrete Positionswerte sind dabei Positionswerte zu bestimmten Zeitpunkten und können vorteilhaft durch ABspeicherung individualisert und für die Verknüpfung mit dem Bremsdruck zur Verfügung gestellt werden. Aus den Wertepaaren wird in einem weiteren Schritt des erfindungsgemäßen Verfahrens zur Überwachung einer pneumatisch betätigbaren Bremse eine die Wertepaare interpolierende Kennfunktion ermittelt. Die interpolierende Kennfunktion ist eine stetige Funktion, welche die vorgegebenen diskreten Daten, das heißt die Wertepaare von Positionswerten und dazugehörigem Bremsdruck zum selben Zeitpunkt, abbildet. Nach der erfindungsgemäß ermittelten Kennfunktion wird ein Kennpositionswert für einen ausgewählten Bremsdruck bestimmt. Der genaue Wert des Ist-Lüftspiels wird dadurch ermittelt, dass von dem Kennpositionswert für den ausgewählten Bremsdruck der in ungebremster Fahrt ermittelte Bezugspositionswert des Bremsverschleißsensors subtrahiert wird.

Die Erfindung hat erkannt, dass die während des Bremsvorgangs auf die funktionstragenden Bauteile wirkenden Kräfte zu elastischen Verformungen führen, beispielsweise einer Aufweitung des Bremssattels, und dadurch eine Bestimmung des Lüftspiels der Bremse aus der Grundlage des Messsignals des Bremsverschleißsensors in unkontrollierbarer Weise verfälscht wird. Dem wird erfindungsgemäß durch die Berücksichtigung des Bremsdrucks Rechnung getragen. Vorteilhaft wird als Information zum aktuellen Bremsdruck für die Bestimmung des Lüftspiels ein Steuerdruck eines elektronischen Bremssystems herangezogen. Dabei wird vorzugsweise auf den Bremsdruck an einem Druckmodulator der betreffenden Bremse zurückgegriffen.

Unbeherrschbare Einflussfaktoren werden durch die Interpolation der Wertepaare eliminiert. Die Erfindung hat außerdem erkannt, dass eine die Wertepaare interpolierende Kennfunktion auch außerhalb der zur Bildung der Wertepaare berücksichtigten Messbereiche repräsentativ ist. Zur Ermittlung des Kennpositionswerts aus der interpolierenden bzw. interpolierten Kennfunktion kann daher ein geeigneter Bremsdruck ausgewählt werden. In einer vorteilhaften Ausführungsform der Erfindung wird als Kennpositionswert ein Anlegedruck der Bremse ausgewählt. Vorzugsweise wird dabei der Anlegedruck mit etwa 0,3 bar angenommen. Für den so ausgewählten Anlegedruck ergibt sich aus der interpolierenden Kennfunktion ein konkreter Kennpositionswert, aus dem nach Abzug des in ungebremster Fahrt ermittelten Bezugspositionswerts das Lüftspiel präzise ermittelt werden kann.

Ein erfindungsgemäßes Bremssystem für Kraftfahrzeuge mit wenigstens einer pneumatisch betätigbaren Bremse umfasst eine Überwachungselektronik zur Überwachung des Lüftspiels der Bremse, an die der Bremsverschleißsensor der jeweiligen Bremse angeschlossen ist. Die Überwachungselektronik ist dabei dazu ausgebildet, den Bezugspositionswert des Bremsverschleißsensors in ungebremster Fahrt zu ermitteln, während einer Bremsung mehrere Wertepaare von diskreten Positionswerten und eines aktuellen Bremsdrucks zum selben Zeitpunkt zu bilden, aus den Wertepaaren eine die Wertepaare interpolierende Kennfunktion zu ermitteln, nach der Kennfunktion einen Kennpositionswert für einen ausgewählten Bremsdruck zu bestimmen und schließlich das genaue Lüftspiel durch Subtraktion des Bezugspositionswerts von dem Kennpositionswert zu ermitteln. Die Ermittlung des Lüftspiels kann somit bei einem Bremssystem für Kraftfahrzeuge mit einem an der Bremse zugeordneten Bremsverschleißsensor mit geringem baulichem Aufwand erfolgen, wenn die Überwachungselektronik zur Durchführung der erfindungsgemäßen Bestimmung des Lüftspiels konfiguriert ist und Informationen über den aktuellen Bremsdruck bereitgestellt werden. Bei Kraftfahrzeugen mit elektronischen Bremssystemen steht die Information über den aktuellen Bremsdruck in der Regel systemimmanent zur Verfügung, so dass die Lüftspielüberwachung gemäß der Erfindung mit den Sensordaten des Bremssystems erfolgen kann.

In einer bevorzugten Ausführungsform sind der Überwachungselektronik ein unterer Grenzwert und ein oberer Grenzwert für das Lüftspiel vorgegeben. Bei der Überwachung des Lüftspiels wird auf einen Fehler geschlossen, wenn das erfindungsgemäß ermittelte Lüftspiel der Bremse den vorgegebenen unteren Grenzwert unterschreitet oder das ermittelte Lüftspiel einen vorgegebenen oberen Grenzwert überschreitet. Aufgrund der genauen Bestimmung des Lüftspiels können die Grenzwerte für ein enges Toleranzintervall für das Lüftspiel vorgeben werden, da dynamische Einflüsse auf die Bestimmung des Lüftspiels, beispielsweise belastungsbedingte Veränderungen der Bremsengeometrie, ausgeschlossen sind . Es ist vielmehr eine wirksame Überwachung des Lüftspiels gegeben, welche nur dann auf Fehler schließt, wenn die engen Grenzen des zulässigen Toleranzbandes des Lüftspiels gemäß den vorgegebenen Grenzwerten überschritten sind.

Gemäß einer Ausführungsform der Erfindung misst der Bremsverschleißsensor kontinuierlich, wobei seine gemessenen Positionswerte als diskrete Positionswerte zu Wertepaaren mit dem jeweiligen Bremsdruck zum gleichen Messzeitpunkt verknüpft werden. Diskrete Positionswerte werden vorzugsweise durch Speicherung der Positionswerte in einem entsprechenden Speicherelement bereitgestellt.

Für die Ermittlung der Kennfunktion werden vorteilhaft Wertepaare für Bremsdrücke oberhalb eines vorgegebenen Mindestdrucks herangezogen, so dass sichergestellt ist, dass die Bremse das Lüftspiel sicher überwunden hat und der lineare Bereich der Bremsenkennung erreicht ist. Beispielsweise kann die Überwachungselektronik derart konfiguriert sein, dass Wertepaare für die Bestimmung des Lüftspiels erst oberhalb eines Mindestdrucks von etwa 0,75 bar gebildet und herangezogen werden.

Vorteilhaft werden die Wertepaare zu einer gradlinigen Kennfunktion interpoliert. Dies gelingt insbesondere, wenn Wertepaare erst oberhalb eines Mindestdrucks ermittelt werden. Die gradlinige Kennfunktion wird auch für den ausgewählten Bremsdruck angenommen, so dass ein Kennfunktionswert für die präzise Bestimmung des Lüftspiels ausgelesen werden kann.

Bei Bremssystemen mit Blockierschutzregelungen, sogenannte Antiblockiersysteme, werden vorteilhaft bei Erkennen eines Blockierschutzeingriffs die bisher gebildeten Wertepaare der betreffenden Bremsung für die Ermittlung des Lüftspiels verworfen. Weist das Bremssystem eine Blockierschutzregelung mit einer dafür ausgebildeten ABS-Elektronik auf, so ist die Überwachungselektronik zur Überwachung des Lüftspiels vorteilhaft in die ABS-Elektronik integriert. Dadurch kann die Überwachungselektronik beziehungsweise die durch sie realisierte Überwachungsfunktion auf Komponenten der ABS-Elektronik und die in der ABS-Elektronik vorhandenen Informationen zurückgreifen.

Ausführungsbeispiele der Erfindung sind nachstehend anhand der Zeichnung näher erläutert. Es zeigen:
- Fig. 1: eine schematische Ansicht eines Ausführungsbeispiels eines Bremssystems für Kraftfahrzeuge,
- Fig. 2: ein grafisches Schaubild einer Kennfunktion für die erfindungsgemäße Ermittlung des Lüftspiels,
- Fig. 3: ein Flussschaubild eines Ausführungsbeispiels eines Verfahrens zur Überwachung einer pneumatisch betätigbaren Bremse für Kraftfahrzeuge.

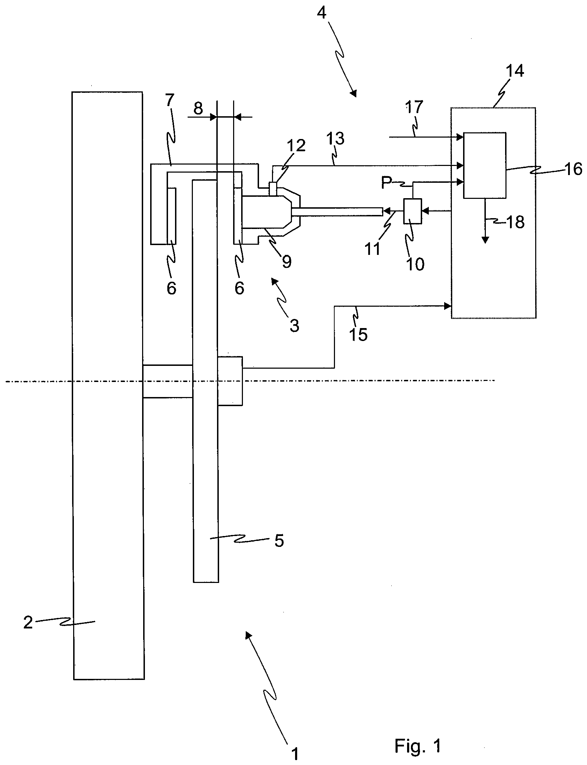

Fig. 1 zeigt einen Ausschnitt eines Kraftfahrzeugs 1, nämlich ein Rad 2 mit einer Bremse 3 sowie einem Ausschnitt eines elektronischen Bremssystems 4.

Die Bremse 3 ist als Scheibenbremse ausgebildet und umfasst eine mit dem Rad 2 umlaufende Bremsscheibe 5. Die Bremsscheibe 5 ist abbremsbar, indem Bremsbeläge 6 an die Oberfläche der Bremsscheibe 5 gepresst werden. Die Bremsbeläge 6 sind beiderseitig der Bremsscheibe 5 an einem Bremssattel 7 gehalten. Die Bremsbeläge 6 liegen dabei jeweils mit einem Lüftspiel 8 von der Bremsscheibe 5 beabstandet, so dass die Bremsscheibe 5 in ungebremsten Zustand frei umlaufen kann.

Die Bremse 3 ist pneumatisch betätigbar und umfasst einen auf die Lage der Bremsbeläge 6 wirkenden Bremszylinder 9. Der Bremszylinder 9 wird von dem elektronischen Bremssystem 4 angesteuert. Hierzu umfasst das elektronische Bremssystem einen Druckmodulator 10, welcher entsprechend den Vorgaben des elektronischen Bremssystems die Druckvermittlung 11 zum Bremszylinder 9 einstellt.

Die Bremse weist einen Bremsverschleißsensor 12 auf, welcher Positionswerte 13 mit Aussage über die Position des Bremsbelags auf seinem vorgesehenen Bewegungsweg misst.

Das elektronische Bremssystem 4 weist im gezeigten Ausführungsbeispiel ein Antiblockiersystem (ABS) auf, von dem symbolisch die ABS-Elektronik 14 dargestellt ist. Die ABS-Elektronik 14 stellt eine Blockierschutzregelung für den Bremsvorgang bereit. Dabei wird aus einer Auswertung der Drehzahl 15 der Räder 2 auf eine Blockierneigung eines bestimmten Rades 2 geschlossen und durch Regelung des Bremsdrucks am entsprechenden Rad eingegriffen.

Das elektronische Bremssystem 4 umfasst außerdem eine Überwachungselektronik 16 zur Überwachung des Lüftspiels 8 einer Bremse 3. Wie nachstehend noch näher erläutert ist, ermittelt die Überwachungselektronik 16 den Ist-Wert 18 des Lüftspiels 8 unter Heranziehung der Positionswerte 13 des Bremsverschleißsensors 12 und des Bremsdrucks P der jeweiligen Bremse 3. Hierzu ist der Überwachungselektronik 16 der aktuelle Steuerdruck P des elektronischen Bremssystems 4 bereitgestellt, nämlich der am Druckmodulator 10 anstehende Bremsdruck P.

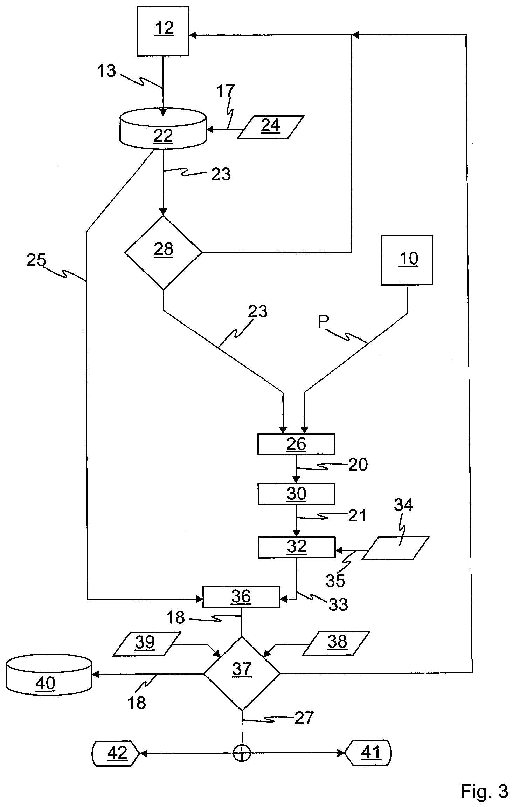

Die Überwachungselektronik 16 ist in die ABS-Elektronik 14 integriert, beziehungsweise die ABS-Elektronik 14 führt die Funktion der Überwachungselektronik 16 wenigstens teilweise aus. Zur Durchführung der Funktion der Überwachungselektronik 16 werden die Positionswerte 13 des Bremsverschleißsensors 12 und der Bremsdruck herangezogen, welche für die Funktion des elektronischen Bremssystems 4 und auch des Antiblockiersystems bereitgehalten und genutzt werden. Außerdem wird der Überwachungselektronik 16 eine Bremsindikation 17 zugeführt, welche der Überwachungselektronik 16 anzeigt, dass eine Bremsung 24 (Fig. 3) angefordert ist, beziehungsweise bereits eingeleitet ist. Die Bremsindikation 17 ist im gezeigten Ausführungsbeispiel ein Aktivierungssignal eines nicht gesondert dargestellten Bremslichtschalters des Kraftfahrzeugs 1.

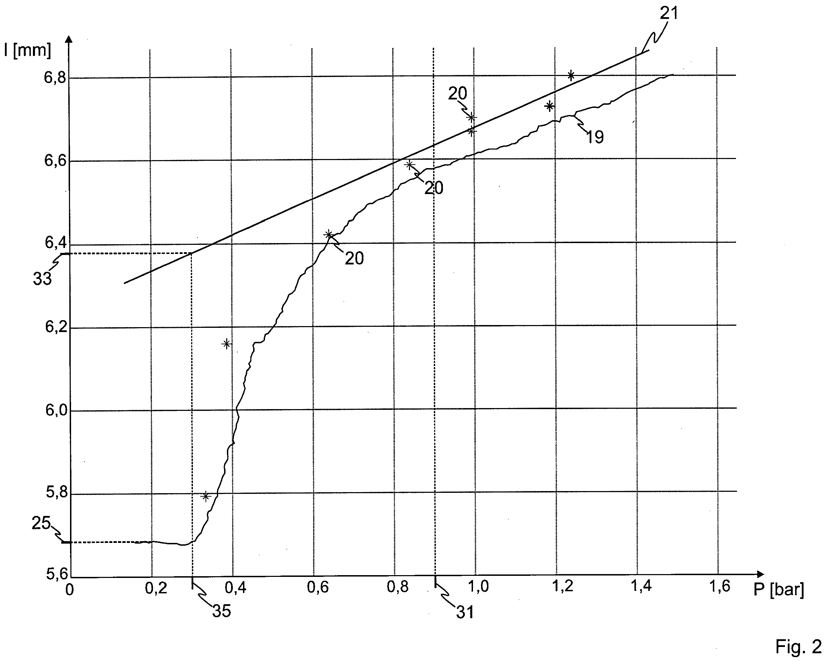

Die Überwachungselektronik 16 ist zur Durchführung des nachstehend anhand von Fig. 2 und Fig. 3 erläuterten Verfahrens zur Überwachung der Bremse 3 unter Ermittlung eines präzisen Ist-Werts des Lüftspiels 8 ausgebildet und konfiguriert. Fig. 2 zeigt ein kartesisches Koordinatensystem mit grafischen Verläufen, wobei ein Druck P auf der Abszissenachse ins Verhältnis gesetzt sind mit Positionswerten in der Dimension Länge I, wie sie vom Bremsverschleißsensor 12 gemessen werden. Dabei ist in dem Schaubild der Verlauf 19 des Drucks im Bremszylinder während einer Bremsung im Verhältnis zu den synchron gemessenen Positionswerten des Bremsverschleißsensors 12 dargestellt. Ferner sind diskrete Wertepaare 20, deren Bestimmung nachstehend anhand Fig. 3 beschrieben wird, sowie eine die Wertepaare 20 interpolierende Kennfunktion 21 dargestellt.

Bei der Überwachung der Bremse 3 und der Ermittlung des Lüftspiels 8 misst der Bremsverschleißsensor 12 kontinuierlich Positionswerte 13, wobei die Messwerte in einem Speicherelement 22 abspeicherbar sind. Aus dem Speicherelement 22 sind somit diskrete Positionswerte 23 mit einem Bezug, insbesondere dem Messzeitpunkt, auslesbar. Das Abspeichern der gemessenen Positionswerte 13 erfolgt im gezeigten Ausführungsbeispiel nachdem die Überwachungselektronik die Bremsindikation 17 empfangen hat, das heißt eine Bremsung 24 des Kraftfahrzeugs 1 angefordert ist. Die Bremsindikation 17 erfolgt durch eine entsprechende Bewertung des Schaltzustands eines Bremslichtschalters des Kraftfahrzeugs 1, beziehungsweise dessen Ausgangssignal. Wird der Überwachungselektronik 16 eine Bremsung 24 angezeigt, so wird der aktuell gemessene Positionswert 13 abgespeichert. Auf diese Weise ist ein (zeit-)diskreter Bezugspositionswert 25 des Bremsverschleißsensors in ungebremster Fahrt des Kraftfahrzeugs 1 ermittelt und für die spätere Heranziehung bei der Bestimmung des Lüftspiels 8 bereitgestellt.

Während der Bremsung 24 werden fortlaufend gemessene Positionswerte 13 abgespeichert und für die Ermittlung des Lüftungsspiels bereitgehalten.

Mit diskreten Positionswerte 23 und Information zum jeweiligen Bremsdruck P zum selben Zeitpunkt erfolgt eine Bestimmung 26 mehrerer Wertepaare 20. Die diskreten Positionswerte 23 werden mit dem aktuellen Bremsdruck P zum selben Zeitpunkt in einem Verknüpfungsschritt 26 zu Wertepaaren 20 verknüpft. Die Informationen zum aktuellen Bremsdruck P werden von dem elektronischen Bremssystem 4 bereitgestellt. Im gezeigten Ausführungsbeispiel ist der in den Wertepaaren 20 berücksichtigte Bremsdruck P der Steuerdruck am Druckmodulator 10 (Fig. 1). Vor der Bestimmung 26 der Wertepaare 20 erfolgt allerdings eine Abfrage 28 des Status des Antiblockiersystems. Bei Erkennung einer Bremsung mit Blockierschutzeingriff der Blockierschutzregelung werden die ermittelten Werte der betreffenden Bremsung 24 für die Ermittlung des Lüftspiels 8 verworfen. In dem Fall kehrt das Verfahren in dem Flussschaubild gem. Fig. 3 in Pfeilrichtung 29 zum Ausgangspunkt zurück.

Aus den Wertepaaren 20 der diskreten Positionswerte 23 und des damit verknüpften Bremsdrucks P erfolgt mittels eines Interpolationsalgorithmus eine Ermittlung 30 der in Fig. 2 dargestellten Kennfunktion 21, welche die Wertepaare 20 interpoliert. Für die Ermittlung 30 der Kennfunktion 21 werden Bremsdrücke P oberhalb eines vorgegebenen Mindestdrucks 31 (Fig. 2) herangezogen, so dass sichergestellt ist, dass das tatsächliche Lüftspiel 8 der Bremse überwunden ist und Werte aus dem linearen Bereich der Bremsenkennung ausgewertet werden. Der Mindestdruck 31 wird vorzugsweise mit etwa 0,75 bar angenommen.

Die Kennfunktion 21 wird anschließend für eine Bestimmung 32 eines Kennpositionswerts 33 herangezogen. Nach der Kennfunktion 21 wird der Kennpositionswert 33 für einen ausgewählten Bremsdruck bestimmt bzw. der Kennpositionswert 33 für den ausgewählten Bremsdruck aus der Kennfunktion 21 ausgelesen. Der zum Auslesen des Kennpositionswerts 33 herangezogene Bremsdruck wird im Ausführungsbeispiel von einer Druckvorgabe 34 angegeben.

Als Druckvorgabe 34 wird bevorzugt der Anlegedruck 35 der Bremse bestimmt. Der Anlegedruck 35 der Bremse ist somit als Kennpositionswert 33 zum Auslesen der Kennfunktion 21 ausgewählt. Der Anlegedruck 35 ist dabei die Dimension des Bremsdrucks, bei dem die Bremsbeläge in Eingriff mit dem Reibpartner gebracht werden. Entsprechend signalisiert der Verlauf 19 des Bremszylinderdrucks (Fig. 2) nach Überschreiten des Anlegedrucks 35 einen Anstieg des Positionswerts des Bremsverschleißsensors.

Die Wertepaare 20 werden zu einer geradlinigen Kennfunktion 21 interpoliert, deren Verlauf in den Druckbereich unterhalb des Mindestdrucks verlängert ist. Die Steigung der stetigen Kennfunktion 21 entspricht dabei dem linearen Bereich der Bremsenkennung, welcher oberhalb des vorgegebenen Mindestdrucks 21 liegt.

Mit Kenntnis des Kennpositionswerts 33 und des Bezugspositionswerts 25 aus ungebremster Fahrt erfolgt die Bestimmung des Lüftspiels 8 durch Subtraktion 36 des Bezugspositionswerts 25 von dem Kennpositionswert 33. Die durch Subtraktion 36 bestimmte Größe entspricht dem genauen Ist-Wert 18 des Lüftspiels 8.

Der so ermittelte Ist-Wert 18 des Lüftspiels 8 wird schließlich in einer Überwachung 37 mit vorgegebenen Grenzwerten 38, 39 verglichen. Der Überwachung 37 wird ein oberer Grenzwert 38 vorgegeben, welcher beispielsweise 1,4 mm beträgt. Außerdem wird ein unterer Grenzwert 39 vorgegeben, welcher in einem vorteilhaften Ausführungsbeispiel 0,5 mm beträgt. Die Überwachungselektronik 16 schließt auf einen Fehler 27 bei der Überwachung der Bremse, wenn der Istwert 18 des Lüftspiels 8 den unteren Grenzwert 38 unterschreitet oder den vorgegebenen oberen Grenzwert 39 überschreitet. Liegt der Ist-Wert 18 des Lüftspiels 8 zwischen den Grenzwerten 38, 39, so wird der Ist-Wert 18 des Lüftspiels 8 in einem Speicherelement 40 abgespeichert und für eine weitere Verwendung der Information über das aktuelle Lüftspiel 8 der betreffenden Bremse 3 in dem elektronischen Bremssystem 4 bereitgehalten.

Überschreitet der ermittelte Ist-Wert 18 des Lüftspiels 8 den oberen Grenzwert 38, so wird auf ein zu großes Lüftspiel 8 als Fehler 27 geschlossen und eine für diesen Störungszustand 41 vorgesehene Maßnahme eingeleitet. Liegt der Ist-Wert 18 des Lüftspiels 8 unterhalb des unteren Grenzwerts 39, so wird auf den Störungszustand 42 geschlossen, bei dem ein zu kleines Lüftspiel 8 und damit die Neigung zu einem Heißlaufen der Bremse 3 angenommen wird.

Das erfindungsgemäße Verfahren und das Bremssystem zur Durchführung des Verfahrens werden vorzugsweise bei Nutzfahrzeugen verwendet.

### Bezugszeichenliste (Bestandteil der Beschreibung)

- 1: Kraftfahrzeug
- 2: Rad
- 3: Bremse
- 4: Elektronisches Bremssystem
- 5: Bremsscheibe
- 6: Bremsbelag
- 7: Bremssattel
- 8: Lüftspiel
- 9: Bremszylinder
- 10: Druckmodulator
- 11: Druckvermittlung
- 12: Bremsverschleißsensor
- 13: Positionswert
- 14: ABS-Elektronik
- 15: Drehzahl
- 16: Überwachungselektronik
- 17: Bremsindikation
- 18: Ist-Wert Lüftspiel
- 19: Verlauf
- 20: Wertepaar
- 21: Kennfunktion
- 22: Speicherelement
- 23: diskreter Positionswert
- 24: Bremsung
- 25: Bezugspositionswert
- 26: Bestimmung Wertepaare
- 27: Fehler
- 28: Abfrage ABS-Status
- 29: Pfeilrichtung
- 30: Ermittlung Kennfunktion (Interpolation)
- 31: Mindestdruck
- 32: Ausleseschritt
- 33: Kennpositionswert
- 34: Druckvorgabe
- 35: Anlegedruck
- 36: Subtraktion
- 37: Überwachung
- 38: oberer Grenzwert
- 39: unterer Grenzwert
- 40: Speicherelement
- 41: Störungszustand
- 42: Störungszustand

## Patentansprüche

1. Verfahren zur Überwachung einer pneumatisch betätigbaren Bremse (3) für Kraftfahrzeuge (1), wobei ein Lüftspiel (8) der Bremse (3) unter Heranziehung von gemessenen Positionswerten (13) eines Bremsverschleißsensors (12) ermittelt wird, umfassend die folgenden Schritte:
- Ermittlung eines Bezugspositionswert (25) des Bremsverschleißsensors (12) in ungebremster Fahrt,
- Bestimmung (26) mehrerer Wertepaare (20) von diskreten Positionswerten (23) und eines aktuellen Bremsdrucks P zum selben Zeitpunkt während einer Bremsung (24),
- Ermittlung (30) einer die Wertepaare (20) interpolierenden Kennfunktion (21),
- Bestimmung (32) eines Kennpositionswerts (33) nach der Kennfunktion (21) für einen ausgewählten Bremsdruck (35) und
Bestimmung (36) eines Ist-Werts (18) des Lüftspiels (8) durch Subtraktion (36) des Bezugspositionswerts (25) von dem Kennpositionswert (33), **dadurch gekennzeichnet, dass** Wertepaare (20) für Bremsdrücke (P) oberhalb eines vorgegebenen Mindestdrucks (31) herangezogen werden.

2. Verfahren nach Anspruch 1,
**dadurch gekennzeichnet, dass**
auf einen Fehler (27) geschlossen wird, wenn das Lüftspiel (8) der Bremse (2) einen vorgegebenen unteren Grenzwert (39) unterschreitet oder das ermittelte Lüftspiel (8) einen vorgegebenen oberen Grenzwert (38) überschreitet.

3. Verfahren nach Anspruch 1 oder 2
**dadurch gekennzeichnet, dass**
der Bremsverschleißsensor (12) kontinuierlich misst und seine gemessenen Positionswerte (13) als diskrete Positionswerte (23) mit dem jeweiligen Bremsdruck zum gleichen Zeitpunkt verknüpft werden, insbesondere für die Ermittlung der Kennfunktion (21).

4. Verfahren nach einem der vorhergehenden Ansprüche,
**dadurch gekennzeichnet, dass**
für die Bestimmung des Kennpositionswerts (33) aus der Kennlinie (21) ein Anlegedruck (35) der Bremse (3) ausgewählt wird.

5. Verfahren nach einem der vorhergehenden Ansprüche,
**dadurch gekennzeichnet, dass**
als Bremsdruck P für die Bildung der Wertepaare (20) der Steuerdruck eines elektronischen Bremssystems (3) herangezogen wird.

6. Verfahren nach einem der vorhergehenden Ansprüche,
**dadurch gekennzeichnet, dass**
bei Erkennen einer Bremsung (24) mit Blockierschutzeingriff einer Blockierschutzregelung die ermittelten Werte der betreffenden Bremsung (24) für die Ermittlung des Lüftspiels (8) verworfen werden.

7. Verfahren nach einem der vorhergehenden Ansprüche,
**dadurch gekennzeichnet, dass**
die Wertepaare (20) zu einer gradlinigen Kennfunktion (21) interpoliert werden.

8. Bremssystem für Kraftfahrzeuge mit wenigstens einer pneumatisch betätigbaren Bremse (3), einem der Bremse (3) zugeordneten Bremsverschleißsensor (12) sowie einer Überwachungselektronik (16) zur Überwachung des Lüftspiels (8) der Bremse (3), an die der Bremsverschleißsensor (12) angeschlossen ist,
**dadurch gekennzeichnet, dass**
die Überwachungselektronik (16) zur Durchführung des Verfahrens nach einem der Ansprüche 1 bis 7 ausgebildet ist.

9. Bremssystem nach Anspruch 8,
**dadurch gekennzeichnet, dass**
der Überwachungselektronik (16) ein unterer Grenzwert (39) und ein oberer Grenzwert (38) für das Lüftspiel (8) vorgegeben ist, wobei die Überwachungselektronik (16) dazu ausgebildet ist, aus einem Unterschreiten des unteren Grenzwerts (39) oder einem Überschreiten des oberen Grenzwerts (38) auf einen Fehler (27) zu schließen,

10. Bremssystem nach Anspruch 8 oder 9,
**dadurch gekennzeichnet, dass**
die Bremse (3) als Scheibenbremse ausgebildet ist.

11. Bremssystem nach einem der Ansprüche 8 bis 10,
**dadurch gekennzeichnet, dass**
das Bremssystem (3) elektronisch gesteuert ist, wobei der Überwachungselektronik (16) der Steuerdruck des elektronischen Bremssystems (3) bereitgestellt ist.

12. Bremssystem nach einem der Ansprüche 8 bis 11,
**dadurch gekennzeichnet, dass**
das Bremssystem (3) eine Blockierschutzregelung mit einer dafür ausgebildeten ABS-Elektronik (14) aufweist.

13. Bremssystem nach Anspruch 12,
**dadurch gekennzeichnet, dass**
die Überwachungselektronik (16) in die ABS-Elektronik (14) integriert ist.

14. Kraftfahrzeug mit einem Bremssystem (3) gemäß einem der Ansprüche 8 bis 13, deren Überwachungselektronik (16) zur Überwachung des Lüftspiels zur Durchführung des Verfahrens nach einem der Ansprüche 1 bis 7 ausgebildet ist.

## Claims

1. Method for monitoring a pneumatically operable brake (3) for motor vehicles (1), wherein an air gap (8) of the brake (3) is determined by using measured position values (13) of a brake wear sensor (12), comprising the following steps:
- Determining a reference position value (25) of the brake wear sensor (12) in unbraked drive,
- Determining (26) several value pairs (20) of discrete position values (23) and one actual braking pressure P at the same point in time during braking (24),
- Determining (30) one of the value pairs (20) of interpolating characteristic function (21),
- Determining (32) one characteristic position value (33) according to the characteristic function (21) for selected braking pressure (35) and
determining (36) an actual value (18) of the air gap (8) by subtracting (36) the reference position value (25) from the characteristic position value (33), **characterized in that** the value pairs (20) for the braking pressure (P) above a predefined minimum pressure (31) are used.

2. Method according to Claim 1,
**characterized in that**
it is decided on the basis of an error (27) when the air gap (8) of the brake (2) falls below a predefined lower limit value (39) or the determined air gap (8) surpasses a predefined upper limit value (38).

3. Method according to Claim 1 or 2,
**characterized in that**
the brake wear sensor (12) continuously makes measurements and its measured position values (13) are coupled at the same point in time as discrete position values (23) with the respective braking pressure, in particular for determining the characteristic function (21).

4. Method according to one of the preceding claims,
**characterized in that**
for determining the characteristic position value (33) an application pressure (35) of the brake (3) is selected from the characteristic line (21).

5. Method according to one of the preceding claims,
**characterized in that**
the control pressure of an electronic braking system (3) is used as braking pressure P for building the value pairs (20).

6. Method according to one of the preceding claims,
**characterized in that**
at the recognition of a braking (24) with blocking protection intervention of a blocking protection regulator, the determined values of the corresponding braking (24) for determining the air gap (8) are discarded.

7. Method according to one of the preceding claims,
**characterized in that**
the value pairs (20) are interpolated to a straight-line characteristic function (21).

8. Braking system for motor vehicles with at least one pneumatically operable brake (3), one brake wear sensor (12) assigned to the brake (3) as well as one electronic monitoring device (16) for monitoring the air gap (8) of the brake (3), to which the brake wear sensor (12) is connected,
**characterized in that**
the electronic monitoring device (16) is designed for implementation of the method according to one of the claims from 1 to 7.

9. Braking system according to Claim 8,
**characterized in that**
a lower limit value (39) and an upper limit value (38) for the air gap (8) are assigned to the electronic monitoring device (16), wherein the electronic monitoring device (16) is designed in a way to shut down at error (27) when there is a falling below a predefined lower limit value (39) or surpassing a predefined upper limit value (38),

10. Braking system according to Claim 8 or 9,
**characterized in that**
the brake (3) is designed as a disc brake.

11. Braking system according to one of the claims 8 to 10,
**characterized in that**
the braking system (3) is controlled electronically, wherein the control pressure of the electronic braking system (3) is made available to the electronic monitoring device (16).

12. Braking system according to one of the claims 8 to 11,
**characterized in that**
the braking system (3) has an anti-lock control device with an ABS electronic device (14) designed to this purpose.

13. Braking system according to Claim 12,
**characterized in that**
the electronic monitoring device (16) is integrated in the ABS electronic device (14).

14. Motor vehicle with a braking system (3) according to one of the claims 8 to 13, whose electronic monitoring device (16) is designed for monitoring the air gap for implementing the method according to one of the claims 1 to 7.

## Revendications

1. Procédé destiné à surveiller un frein (3) pneumatiquement actionnable pour des véhicules automobiles (1), dans lequel un jeu d'air (8) du frein (3) est établi en recourant à des valeurs de position (13) mesurées d'un capteur d'usure de frein (12), qui comprend les étapes suivantes :
- établissement d'une valeur de position de référence (25) du capteur d'usure de frein (12) sur une translation non freinée,
- détermination (26) de plusieurs paires de valeurs (20) de valeurs de position (23) discrètes et d'une pression de freinage P en cours au même instant pendant un freinage (24),
- établissement (30) d'une fonction caractéristique (21) qui interpole les paires de valeurs (20),
- détermination (32) d'une valeur de position caractéristique (33) d'après la fonction caractéristique (21) pour une pression de freinage (35) choisie et
détermination (36) d'une valeur réelle (18) du jeu d'air (8) par soustraction (36) de la valeur de position de référence (25) de la valeur de position caractéristique (33), **caractérisé en ce que** des paires de valeurs (20) pour des pressions de freinage (P) supérieures à une pression minimale (31) prédéfinie sont utilisées.

2. Procédé selon la revendication 1,
**caractérisé en ce que**
il est conclu à une erreur (27) lorsque le jeu d'air (8) du frein (2) est inférieur à une valeur limite inférieure (39) prédéfinie ou le jeu d'air (8) établi est supérieur à une valeur limite supérieure (38) prédéfinie.

3. Procédé selon la revendication 1 ou 2,
**caractérisé en ce que**
le capteur d'usure de frein (12) mesure en continu et ses valeurs de position (13) mesurées sont combinées en tant que valeurs de position (23) discrètes avec la pression de freinage respective au même instant, en particulier pour l'établissement de la fonction caractéristique (21).

4. Procédé selon l'une des revendications précédentes,
**caractérisé en ce que**
pour la détermination de la valeur de position caractéristique (33) depuis la fonction caractéristique (21) est choisie une pression d'application (35) du frein (3).

5. Procédé selon l'une des revendications précédentes,
**caractérisé en ce que**
en tant que pression de freinage P pour la formation des paires de valeurs (20) est utilisée la pression de commande d'un système de freinage (3) électronique.

6. Procédé selon l'une des revendications précédentes,
**caractérisé en ce que**
lors de la reconnaissance d'un freinage (24) avec un engagement antiblocage d'une régulation antiblocage les valeurs établies du freinage (24) concerné sont écartées pour l'établissement du jeu d'air (8).

7. Procédé selon l'une des revendications précédentes,
**caractérisé en ce que**
les paires de valeurs (20) sont interpolées en une fonction caractéristique (21) linéaire.

8. Système de freinage pour des véhicules automobiles avec au moins un frein (3) pneumatiquement actionnable, un capteur d'usure de frein (12) attribué au frein (3), ainsi qu'une électronique de surveillance (16) pour surveiller le jeu d'air (8) du frein (3) à laquelle le capteur d'usure de frein (12) est raccordé,
**caractérisé en ce que**
l'électronique de surveillance (16) est conçue pour exécuter le procédé selon l'une des revendications 1 à 7.

9. Système de freinage selon la revendication 8,
**caractérisé en ce que**
à l'électronique de surveillance (16) sont affectées une valeur limite inférieure (39) et une valeur limite supérieure (38) pour le jeu d'air (8), dans lequel l'électronique de surveillance (16) est conçue pour conclure à une erreur (27) lorsque la valeur limite inférieure (39) n'est pas atteinte ou la valeur limite supérieure (38) est dépassée.

10. Système de freinage selon la revendication 8 ou 9,
**caractérisé en ce que**
le frein (3) est conçu en tant que frein à disque.

11. Système de freinage selon l'une des revendications 8 à 10,
**caractérisé en ce que**
le système de freinage (3) est commandé électroniquement, dans lequel la pression de commande du système de freinage (3) électronique est fournie à l'électronique de surveillance (16).

12. Système de freinage selon l'une des revendications 8 à 11,
**caractérisé en ce que**
le système de freinage (3) présente une régulation antiblocage avec une électronique ABS (14) conçue à cet effet.

13. Système de freinage selon la revendication 12,
**caractérisé en ce que**
l'électronique de surveillance (16) est intégrée à l'électronique ABS (14).

14. Véhicule automobile avec un système de freinage (3) selon l'une des revendications 8 à 13, dont l'électronique de surveillance (16) pour surveiller le jeu d'air est conçue pour exécuter le procédé selon l'une des revendications 1 à 7.
